# EUROPEAN PATENT SPECIFICATION

(11) **EP 1 190 182 B1**
(45) Date of publication and mention of the grant of the patent: **05.11.2003**
(21) Application number: 00942265.0
(22) Date of filing: 04.07.2000
(51) Int. Cl.: F16F 9/02

(54) **GAS SPRING**
GASFEDER
RESSORT A GAZ

(30) Priority: 06.07.1999 GB 9915854
(43) Date of publication of application: 27.03.2002
(73) Proprietor: TRELLEBORG AB, 231 22 Trelleborg (SE)
(72) Inventor: ECARNOT, Eric, F-25770 Serre-Les-Sapins (FR)
(74) Representative: Abello, Michel
(86) International application number: GB0002564
(87) International publication number: WO01002748

(56) References cited:
- EP-A- 0 508 778
- US-A- 5 832 978
- PATENT ABSTRACTS OF JAPAN vol. 003, no. 080 (M-065), 11 July 1979 (1979-07-11) & JP 54 057077 A (NISSAN MOTOR CO LTD), 8 May 1979 (1979-05-08)

## Description

This invention relates to a gas spring of the type used, for example, to assist the opening of a vehicle door.

EP-A1-0508778 discloses cylinder means, a piston rod slidably mounted in the cylinder means and carrying a piston. The piston divides the cylinder means into a first working chamber containing the piston rod and a second working chamber.

According to the invention there is provided a gas spring comprising, cylinder means, a piston rod slidably mounted within the cylinder means and carrying a piston, the piston dividing the cylinder means into a first working chamber containing the piston rod and a second working chamber, characterised in that rod limit means are mechanically coupled to and movable with the piston rod and cylinder limit means, are located within the first chamber and are mechanically coupled to the cylinder means, the limit of maximum extension of the piston rod out of the cylinder means being provided by contact between the rod limit means and the cylinder limit means, the rod limit means and/or the cylinder limit means being axially movable to adjust the limit of maximum extension of the piston rod.

Embodiments of gas springs in accordance with the invention will now be described by way of example with reference to the drawings in which:
Figure 1 is a sectional view of a prior art gas spring;
Figure 2A is a partial sectional view of a prior art gas spring in which the maximum extension length may be adjusted using a threaded fixing cage;
Figure 2B is a sectional view through the area marked "Z" on Figure 2A showing adjustment for minimum extension;
Figure 2C is a sectional view through the area marked "Z" on Figure 2A showing the spring adjusted for maximum extension;
Figure 3 is a sectional view through a prior art gas spring with the piston rod extended;
Figure 4A is a detailed sectional view of the piston of a gas spring as the piston rod travels outwardly of the cylinder;
Figure 4B is a detailed sectional view of the piston of a gas spring as the piston rod re-enters the cylinder;
Figure 5 is a sectional view of a gas spring in accordance with the invention at maximum extension;
Figure 6 is a detailed sectional view of part of Figure 5;
Figure 7 is a sectional view of the gas spring of Figure 5 in a minimum extension position;
Figure 8 is a detailed sectional view of a portion of Figure 7;
Figure 9A is a gas spring including a mechanical compression spring, adjusted for minimum extent and shown with the piston rod extended out of the cylinder;
Figure 9B is the gas spring of Figure 9A with the piston in contact with the compression spring;
Figure 9C is the gas spring of Figure 9A shown with the piston rod retracted into the cylinder;
Figure 9D shows the gas spring of Figure 9A adjusted for maximum extent and shown with the piston rod extended out of the cylinder;
Figure 9E is the gas spring of Figure 9D with the piston in contact with the compression spring;
Figure 9F is the gas spring of Figure 9D shown with the piston rod retracted;
Figure 10 is a detailed sectional view of the piston of an alternative gas spring;
Figure 11 is a detailed sectional view of the piston and end stop of a further alternative gas spring;
Figure 12A shows an alternative configuration for the abutting surfaces of the piston and annulus of the gas spring of Figure 5; and
Figure 12B is a detail of Figure 12A.

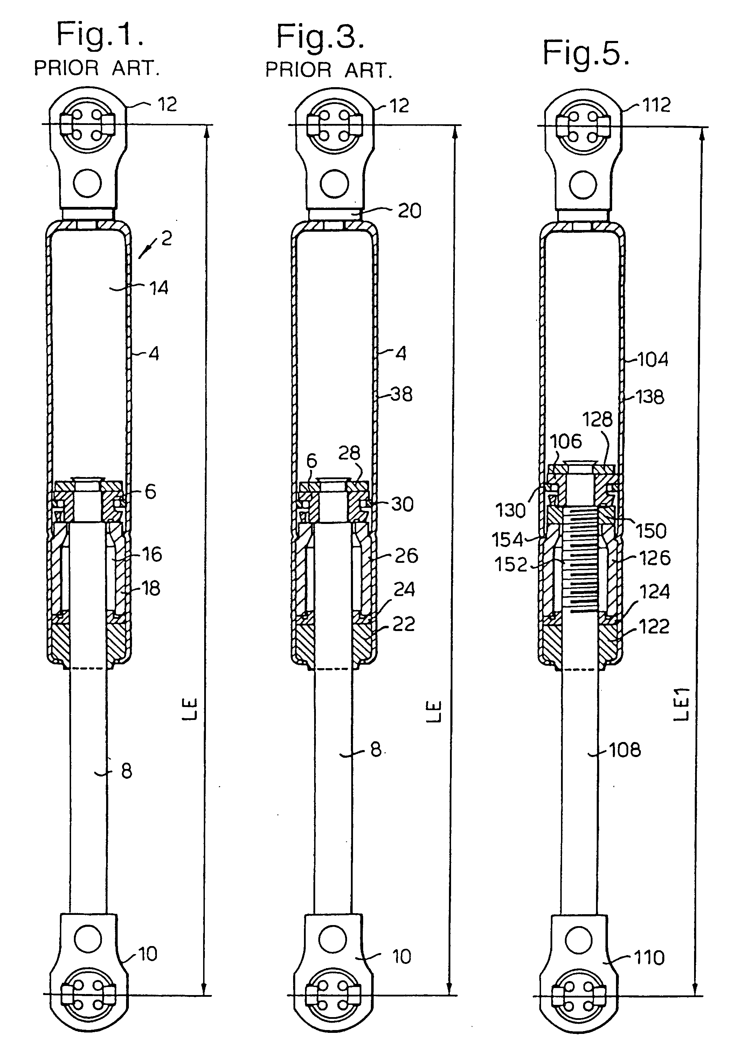

With reference to Figure 1, a conventional gas spring 2 has cylinder means 4, and a piston 6 carried on a piston rod 8. The piston 6 is slidable within the cylinder means 4. At its distal end, the piston rod carries a fixing cage 10 which is fixable to a vehicle body or vehicle door. Similarly, the cylinder means 4 carries a fixing cage 12 for mounting to the other of a vehicle body or door.

The cylinder means 4 contains gas under pressure which acts on both faces of the piston 6. However, since the piston rod 8 is located in one of the chambers defined within the cylinder means by the piston 6, the pressurised gas acts on a greater surface area of the piston 6 in the upper chamber 14 than in the lower chamber 16. Thus the piston rod is forced out of the cylinder means 4 by gas pressure.

Thus, the gas spring 2 may be used to assist in lifting a vehicle door such as a hatchback. Typically, the gas pressure, the mounting positions of the cages 10 and 12 and the diameter of the piston rod 8 will be chosen such that the gas spring exerts sufficient force to lift the hatchback without user assistance until the piston is in the position shown in the Figure in which it abuts an end stop 18. In this position, the vehicle door, such as a hatchback, is fully open.

However, the fully-open position of the hatchback must be selected to provide sufficient height for tall drivers to reach into the boot beneath the hatchback. However, for shorter drivers, this may mean that it is difficult to reach up to the hatchback to close it again.

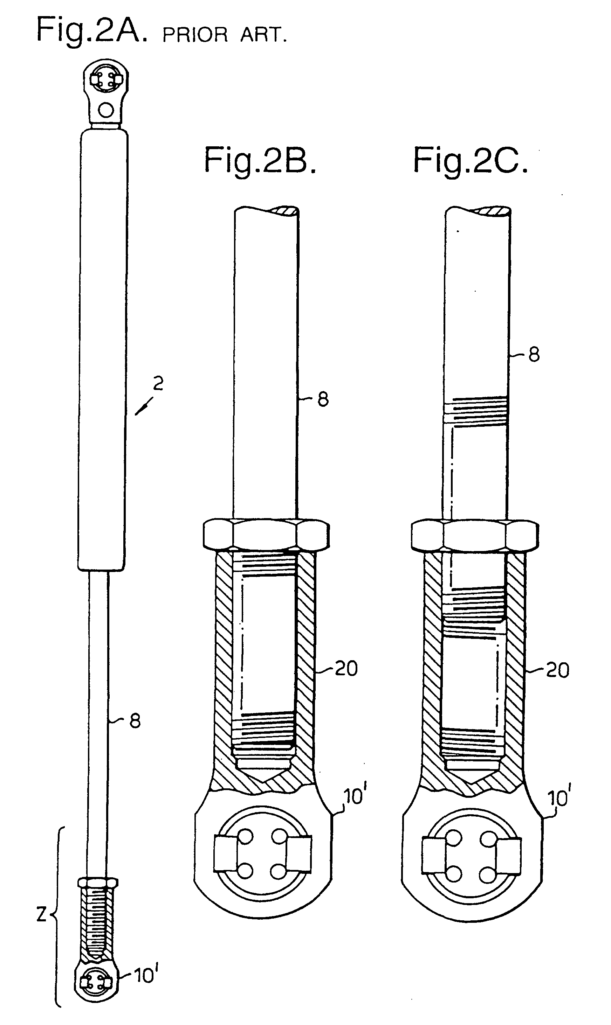

To overcome this problem, the prior art adjustment mechanism of Figure 2 has been used. This mechanism comprises a modified fixing cage 10' which includes a threaded neck portion 20 into which the piston rod 8 passes. The piston rod 8 has a correspondingly threaded portion and by rotating the piston rod 8 relative to the fixing cage 10', it is possible to vary the extended length LE between the two cages 10 and 12 when the gas spring is at its maximum extension position. This correspondingly varies the height of the hatchback when it is fully open. Figure 2B shows the position of minimum extension and Figure 2C shows the position of maximum extension.

However, although this allows adjustment of the height of the hatchback when it is fully open, it has the significant disadvantage of affecting the balance between the opening force exerted by the gas spring and the closing force due to the mass of the hatchback. Thus this arrangement requires either exceptionally high opening forces to be generated by the spring or provides only a very limited range of adjustment.

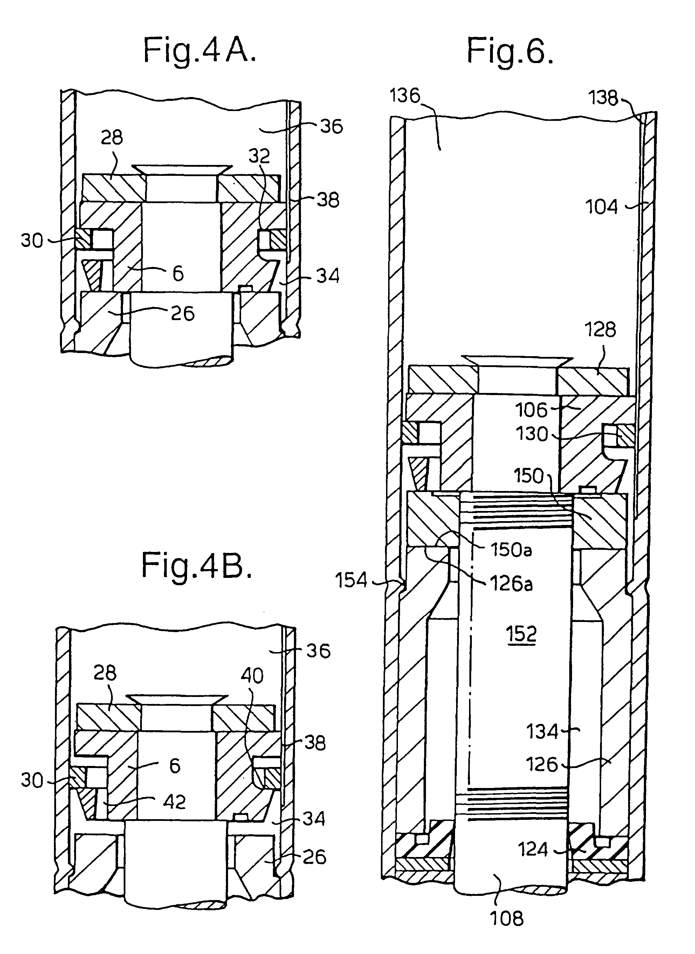

With reference to Figure 3, the gas spring of Figure 1 is shown in more detail. The cylinder means 4 is sealingly closed by an end piece 20 at one end and at the other end of the cylinder means 4, the piston rod 8 passes through a rod guide 22, a seal 24 and an end stop 26.

The piston 6 is held on the piston rod 8 by a washer 28 and includes a generally annular groove which holds a movable piston ring 30. The piston 6 carries out a guiding function and also a speed regulation function.

Figures 4A and 4B show the piston 6 and cylinder means 4 in more detail.

In Figure 4A, the piston has moved generally downwardly in the Figure which corresponds to extension of the piston rod 8 out of the cylinder means 4. This causes the piston ring 30 to move upwardly in the annular groove formed in the piston 6 and this causes it to come into contact with an upper face 32 of the groove and thereby to sealingly divide the cylinder means 4 into a first chamber 34 which contains the piston rod 8 and a second chamber 36.

If the chambers 34 and 36 were both sealed, it will be appreciated that gas pressure acting on both sides of the piston 6 would prevent extension of the piston rod 8 out of the cylinder means 4. However, by forming a groove 38 in the wall of the cylinder means 4, a restricted flow of gas is permitted past the piston ring 30 between the chambers 34 and 36 which gradually allows the piston rod 8 to extend out of the cylinder means 4. Towards the end of the stroke of the piston as the piston rod 8 becomes fully extended, the sectional area of the groove 38 is reduced so that the piston gradually comes to rest in the position shown generally in Figure 4A.

In Figure 4B, as the piston 6 begins to move back into the cylinder means 4 (as a result of user force applied downwardly to the hatchback), the piston ring 30 moves against a face 40 of the annular groove formed in the piston 6, which is opposite the face 32. This allows gas to flow between the chambers via passageway 42 and thus allows the piston rod to re-enter the cylinder means 4 with substantially no resistance.

With reference to Figure 5, a gas spring in accordance with the invention is shown with the piston rod fully extended and providing a maximum extension length LE1. The gas spring has cylinder means 104 having a grooved portion 138 and containing a piston 106. The piston 106 is held on a piston rod 108 by a washer 128.

The piston has an annular groove which holds a piston ring 130.

The piston rod 108 passes through a rod guide 122, a lower seal 124 and an end stop 126. At its lower end, the piston rod 108 has a fixing cage 110. At the upper end of the cylinder means 104, an upper fixing cage 112 is fixed to the cylinder means 104.

With reference also to Figure 6, the piston 106 divides the cylinder means 104 into a first chamber 134 and a second chamber 136.

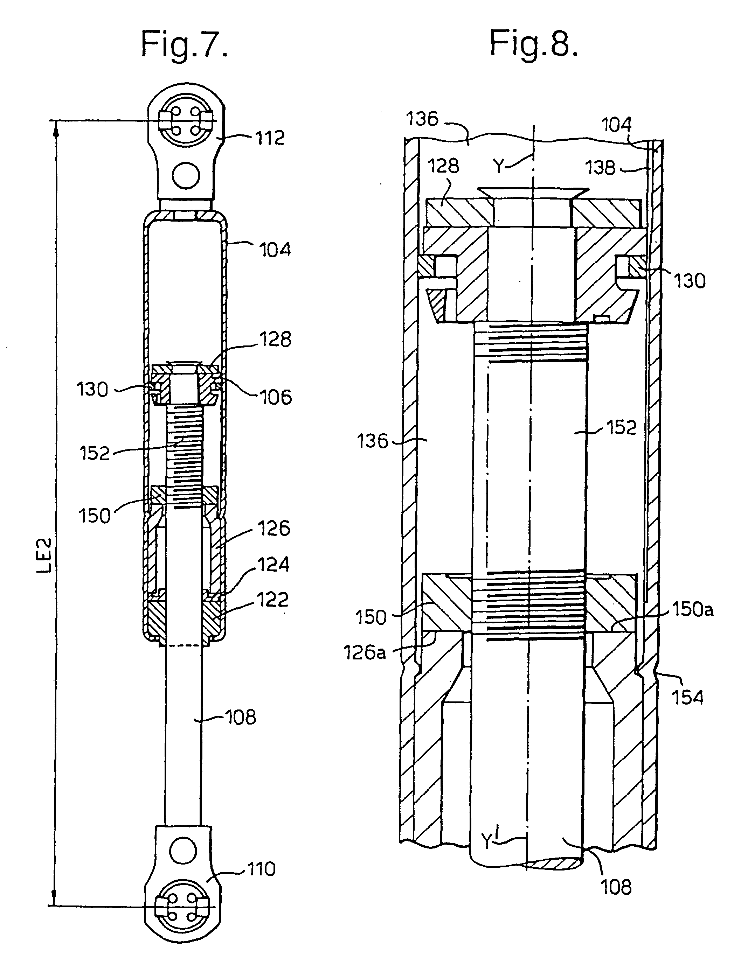

An axially movable annulus 150 (typically a nut) is axially movable on a threaded portion 152 of the piston rod 108. This allows the annulus 150 to move between the position shown in Figure 5 incrementally, to the position shown in Figure 7.

It will be noted that in Figure 7, the piston rod 108 (which is fully extended) provides a shorter distance LE2 between the fixing cages 110 and 112 than the distance LE1 shown in Figure 5. This change in extent has been achieved without affecting the geometry of the gas spring installation and thereby without affecting the equilibrium between the extension force exerted by the gas spring and the compression force exerted by the mass of the hatchback.

With reference in particular to Figure 6, it will be noted that to adjust the axial position of the annulus 150, it is necessary to generate relative rotational movement between the piston rod 108 and the annulus 150. To achieve this, a formation 154 which is formed in the cylinder means 104 grips the end stop 126 to prevent rotation of the end stop 126 relative to the cylinder means 104. In the position shown in Figure 6, with the lower surface of the annulus 150A in contact with the upper surface of the end stop 126A, the annulus 150 will tend to rotate with the end stop 126 by virtue of friction between the faces 126A and 150A. The degree of force required to ensure that the end stop 126 and annulus 150 are suitably frictionally engaged may be adjusted by the choice of materials and surface finishes at the faces 150A and 126A.

Thus, to cause rotation of the annulus 150 about the piston rod 108, it is necessary only to cause relative rotation between the piston rod 108 and the cylinder means 104. This may be achieved by detaching one of the fixing cages 110 or 112 from the door or body of the vehicle and rotating it while the other is held substantially rotationally stationary. Alternatively, one of the fixing cages 110 or 112 may be arranged to permit rotation of the piston rod or cylinder means without requiring it to be detached from the vehicle body or door.

Figure 8 shows a detailed view of the gas spring in the condition shown in Figure 7.

In some situations, the extension force of the gas spring needs to be assisted by a compression spring contained within the cylinder means 104.

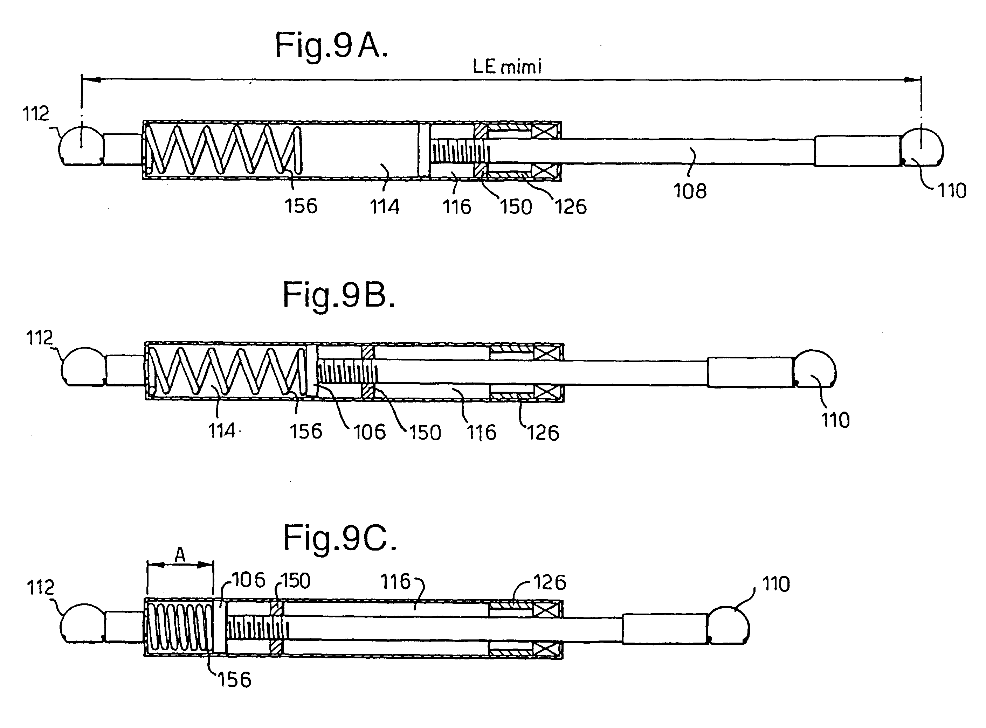

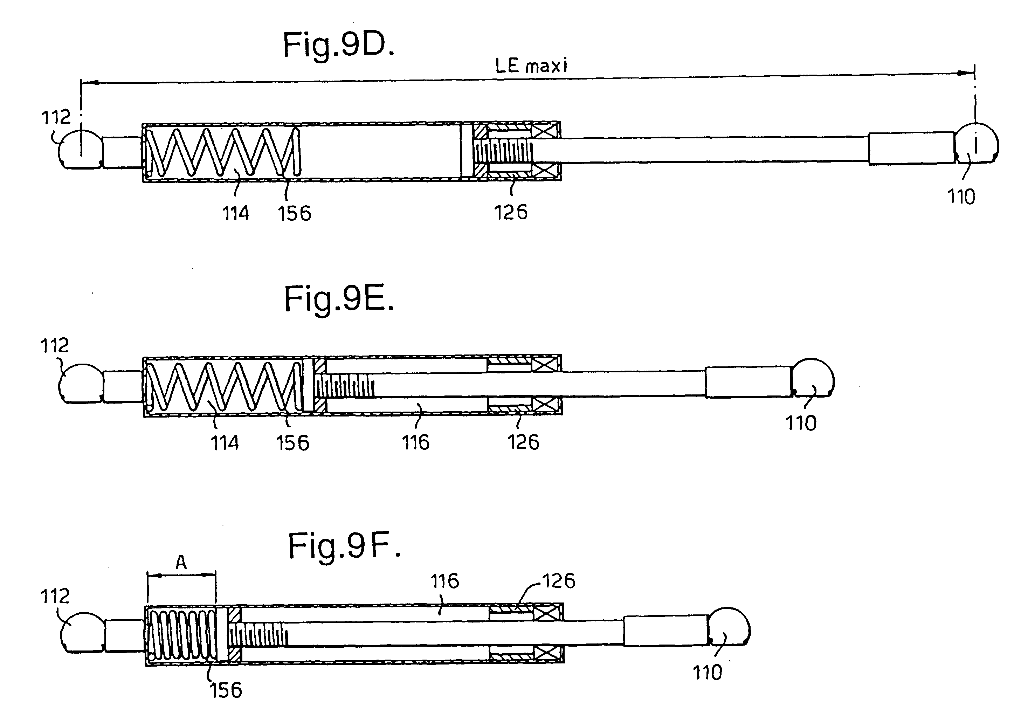

Figure 9 is a series of sectional views of a gas spring of this type with a coil spring 156 inserted within the second chamber 136.

In Figures 9A to 9C, the annulus 150 is adjusted to provide minimum extension of the piston rod when the piston rod 108 is fully extended. Figure 9A shows the piston rod 108 fully extended, Figure 9B shows the piston rod 108 only partially extended and the piston 106 beginning to compress the compression spring 156 and Figure 9C shows the compression spring 156 fully compressed by the piston 106.

Figures 9D to 9F show corresponding positions of the gas spring but in this case, the annulus 150 is adjusted to allow maximum extension of the piston rod at its fully extended position as shown in Figure 9D.

It will be noted from a comparison of Figure 9B with 9E and Figure 9C with 9F, that at its minimum extension position, the relative positions of the fixing cage 112 and spring 156 are unchanged. Thus the assistance provided by the spring is unchanged by adjustment of the annulus 150. This avoids a significant problem with the prior art adjustment mechanism. For example, the mechanism shown in Figure 2 is generally unsuitable for use with gas springs containing mechanical compression springs because the position in the travel of the hatchback door at which the mechanical compression spring begins to have an effect, is varied by the adjustment mechanism. This makes it difficult to balance the spring force provided by the gas spring against the mass of the hatchback.

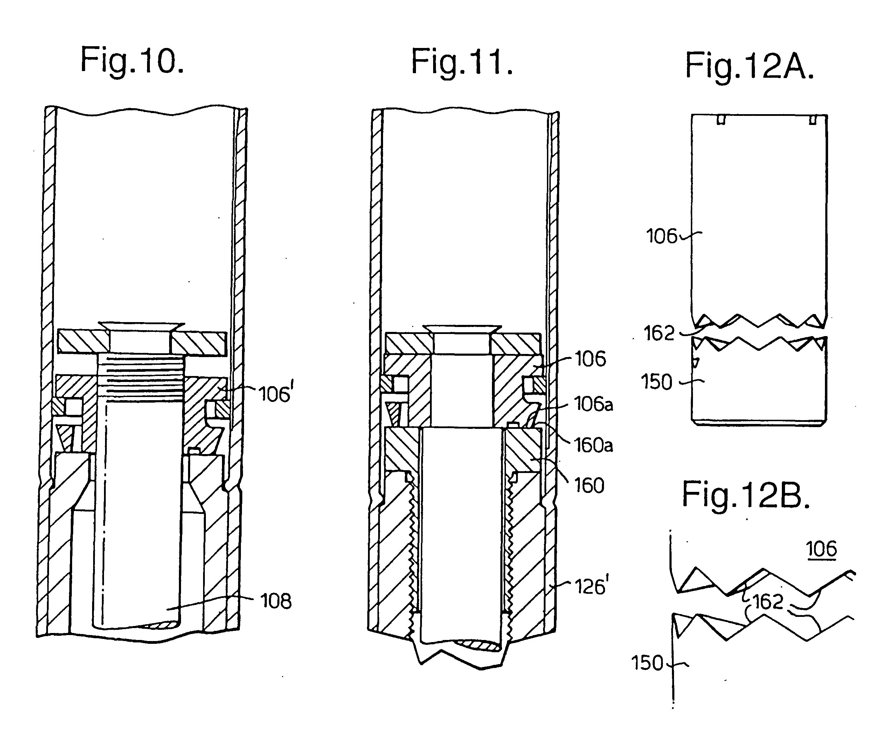

With reference to Figure 10, it will be appreciated that other variations are possible. For example, the piston 106' may be internally threaded so that it is moved axially along the piston rod 108 by relative rotation between the piston 106' and the piston rod 108. In this case, the annulus 150 is not required.

As a further alternative (as shown in Figure 11), the end stop 126' may include an inner member 160 which is threadingly engaged with the end stop 126'. In this way, as the inner member 160 rotates, the upper surface of the inner member 160A which abuts the lower surface of the piston 106A in the fully extended position, is caused to move axially when it rotates relative to the end stop 126'. In this case, the rotational force is transmitted from the piston rod via frictional engagement between the surfaces 106A and 160A of the piston 106 and inner member 160 respectively.

With reference to Figures 12A and 12B, the frictional engagement between the piston 106 and annulus 150 may be assisted by providing co-operating formations on the abutting surfaces of those components such as the crenellations 162 shown in Figures 12A and 12B.

## Claims

1. A gas spring, comprising cylinder means 104, a piston rod 108 slidably mounted within the cylinder means 104 and carrying a piston 106,106', the piston 106,106' dividing the cylinder means 104 into a first working chamber 134 containing the piston rod 108 and a second working chamber 136, **characterised in that** rod limit means 150,106' are mechanically coupled to and movable with the piston rod 108, and cylinder limit means 126,160, are located within the first chamber 134 and are mechanically coupled to the cylinder means 104, the limit of maximum extension of the piston rod 108 out of the cylinder means 104 being provided by contact between the rod limit means 150,106' and the cylinder limit means 126,160, the rod limit means 150,106' and/or the cylinder limit means 126,160 being axially movable to adjust the limit of maximum extension of the piston rod 108.

2. A gas spring according to claim 1, **characterised in that** the rod limit means 150,106' engages the piston rod 108 such that relative rotation between the piston rod 108 and the rod limit means 150,106' causes axial movement of the rod limit means 150,106' along the piston rod 108.

3. A gas spring according to claim 1 or claim 2, **characterised in that** the rod limit means 150,106' is threadingly engaged on a threaded portion 152 of the piston rod 108 located in the first chamber 134.

4. A gas spring according to any preceding claim, **characterised in that** the rod limit means 150,106' is integral with the piston 106,106'.

5. A gas spring according to any preceding claim, **characterised in that** the cylinder limit means 126' comprises an outer member located within and fixed to the cylinder means 104 and which defines a first aperture through which the piston rod 108 passes, and an inner member 160 defining a second aperture through which the piston rod 108 passes, the inner member 160 including an abutment surface 160A which abuts the rod limit means 150,106' when the piston rod 108 is maximally extended from the cylinder means 104, and the inner member 160 being threadingly engaged with the first aperture such that relative rotation between the inner 160 and outer members causes the axial position of the abutment surface 160A to be adjusted.

6. A gas spring according to claim 5, **characterised in that** the rod limit means 150,106' engages the piston rod 108 such that substantially no relative rotational movement can occur between the piston rod 108 and the rod limit means 150,106' and wherein the rod limit means 150,106' is arranged to transmit rotational movement to the inner member 160 via the abutment surface 160A when the piston rod 108 is maximally extended whereby relative rotational movement between the cylinder means 104 and the piston rod 108 when the piston rod 108 is maximally extended causes the axial position of the abutment surface 160A to be adjusted.

7. A gas spring according to any preceding claim, **characterised by** a compression spring 156 in the second chamber 136.

## Patentansprüche

1. Gasfeder, **gekennzeichnet durch** eine Zylindervorrichtung (104), eine Kolbenstange (108), welche verschiebbar innerhalb der Zylindervorrichtung (104) befestigt ist und einen Kolben (106, 106') trägt, wobei der Kolben (106, 106') die Zylindervorrichtung (104) in eine erste Arbeitskammer (134), welche die Kolbenstange (108) enthält, und eine zweite Arbeitskammer (136) unterteilt, eine Kolbenstangen-Begrenzungsvorrichtung (150, 106'), welche mechanisch mit der Kolbenstange (108) verbunden ist und sich mit dieser bewegen kann, und eine Zylinderbegrenzungsvorrichtung (126, 160), welche in der ersten Kammer (134) eingebaut ist und mechanisch mit der Zylindervorrichtung (104) verbunden ist, wobei die Grenze einer Maximalerstreckung der Kolbenstange (108) aus der Zylindervorrichtung (104) heraus **durch** den Kontakt zwischen der Kolbenstangen-Begrenzungsvorrichtung (150, 106') und der Zylinderbegrenzungsvorrichtung (126, 160) vorgesehen ist, wobei die Kolbenstangen-Begrenzungsvorrichtung (150, 106') und/oder die Zylinderbegrenzungsvorrichtung (126, 160) axial beweglich sind, um die Grenze der Maximalausdehnung der Kolbenstange (108) anzupassen.

2. Gasfeder nach Anspruch 1, **dadurch gekennzeichnet, dass** die Kolbenstangen-Begrenzungsvorrichtung (150, 106') mit der Kolbenstange (108) derart in Eingriff ist, dass eine relative Drehung zwischen der Kolbenstange (108) und der Kolbenstangen-Begrenzungsvorrichtung (150, 106') eine axiale Bewegung der Kolbenstangen-Begrenzungsvorrichtung (150, 106') entlang der Kolbenstange (108) verursacht.

3. Gasfeder nach Anspruch 1 oder 2, **dadurch gekennzeichnet, dass** die Kolbenstangen-Begrenzungsvorrichtung (150, 106') über ein Gewinde mit einem mit einem Gewinde versehenen Abschnitt (152) der Kolbenstange (108), die in der ersten Kammer (134) eingebaut ist, verbunden ist.

4. Gasfeder nach einem der vorhergehenden Ansprüche, **dadurch gekennzeichnet, dass** die Kolbenstangen-Begrenzungsvorrichtung (150, 106') einstückig mit dem Kolben (106, 106') ausgebildet ist.

5. Gasfeder nach einem der vorhergehenden Ansprüche, **dadurch gekennzeichnet, dass** die Zylinderbegrenzungsvorrichtung (126') ein Außenelement, welches innerhalb der Zylindervorrichtung (104) eingebaut ist und mit dieser fest verbunden ist und welches eine erste Öffnung definiert, durch welche die Kolbenstange (108) hindurchtritt, und ein Innenelement (160), welches eine zweite Öffnung definiert, durch welche die Kolbenstange (108) hindurchtritt, umfasst, wobei das Innenelement (160) eine Anschlagfläche (160A) aufweist, welche die Kolbenstangen-Begrenzungsvorrichtung (150, 106') anschlagen lässt, wenn sich die Kolbenstange (108) maximal aus der Zylindervorrichtung (104) erstreckt, und wobei das Innenteil (160) über ein Gewinde mit der ersten Öffnung derart in Eingriff ist, dass eine relative Drehung zwischen dem Innenteil (160) und dem Außenteil dazu führt, dass die axiale Position der Anschlagfläche (160A) angepasst wird.

6. Gasfeder nach Anspruch 5, **dadurch gekennzeichnet, dass** die Kolbenstangen-Begrenzungsvorrichtung (150, 106') derart mit der Kolbenstange (108) in Eingriff ist, dass im Wesentlichen keine relative Drehbewegung zwischen der Kolbenstange (108) und der Kolbenstangen-Begrenzungsvorrichtung (150, 106') auftreten kann, und worin die Kolbenstangen-Begrenzungsvorrichtung (150, 106') angeordnet ist, um eine Drehbewegung über die Anschlagfläche (160A) zum Innenteil (160) zu übertragen, wenn sich die Kolbenstange (108) maximal erstreckt, wobei eine relative Drehbewegung zwischen der Zylindervorrichtung (104) und der Kolbenstange (108), wenn die Kolbenstange (108) sich maximal erstreckt, dazu führt, dass die axiale Position der Anschlagfläche (160A) angepasst wird.

7. Gasfeder nach einem der vorhergehenden Ansprüche, **gekennzeichnet durch** eine Druckfeder (156) in der zweiten Kammer (136).

## Revendications

1. Ressort pneumatique, **caractérisé par** des moyens faisant cylindre (104), une tige de piston (108) montée de manière coulissante à l'intérieur des moyens faisant cylindre (104) et portant un piston (106, 106'), le piston (106, 106') divisant les moyens faisant cylindre (104) en une première chambre de travail (134) contenant la tige de piston (108) et en une deuxième chambre de travail (136), des moyens de limitation de tige (150, 106') mécaniquement couplés à et déplaçables avec la tige de piston (108), et des moyens de limitation de cylindre (126, 160) situés à l'intérieur de la première chambre (134) et mécaniquement couplés aux moyens faisant cylindre (104), la limite de l'extension maximale de la tige de piston (108) hors des moyens faisant cylindre (104) étant établie par contact entre les moyens de limitation de tige (150, 106') et les moyens de limitation de cylindre (126, 160), les moyens de limitation de tige (150, 106') et/ou les moyens de limitation de cylindre (126, 160) pouvant être axialement déplacés de manière à ajuster la limite de l'extension maximale de la tige de piston (108).

2. Ressort pneumatique selon la revendication 1, **caractérisé en ce que** les moyens de limitation de tige (150, 106') coopèrent avec la tige de piston (108) de telle sorte qu'une rotation relative entre la tige de piston (108) et les moyens de limitation de tige (150, 106') entraîne un mouvement axial des moyens de limitation de tige (150, 106') le long de la tige de piston (108).

3. Ressort pneumatique selon la revendication 1 ou 2, **caractérisé en ce que** les moyens de limitation de tige (150, 106') sont vissés sur une partie filetée (152) de la tige de piston (108) située dans la première chambre (134).

4. Ressort pneumatique selon l'une quelconque des revendications précédentes, **caractérisé en ce que** les moyens de limitation de tige (150, 106') sont d'un seul tenant avec le piston (106, 106').

5. Ressort pneumatique selon l'une quelconque des revendications précédentes, **caractérisé en ce que** les moyens de limitation de cylindre (126') comprennent un élément extérieur situé à l'intérieur des et fixé aux moyens faisant cylindre (104) et qui définit une première ouverture à travers laquelle passe la tige de piston (108), et un élément intérieur (160) définissant une deuxième ouverture à travers laquelle passe la tige de piston (108), l'élément intérieur (160) comprenant une surface de butée (160A) qui vient buter contre les moyens de limitation de tige (150, 106') lorsque la tige de piston (108) est étendue au maximum à partir des moyens faisant cylindre (104), et l'élément intérieur (160) étant vissé dans la première ouverture de telle sorte qu'une rotation relative entre les éléments intérieur (160) et extérieur provoque un réglage de la position axiale de la surface de butée (160A).

6. Ressort pneumatique selon la revendication 5, **caractérisé en ce que** les moyens de limitation de tige (150, 106') coopèrent avec la tige de piston (108) de telle sorte qu'il ne puisse se produire substantiellement aucun mouvement relatif de rotation entre la tige de piston (108) et les moyens de limitation de tige (150, 106'), et dans lequel les moyens de limitation de tige (150, 106') sont agencés de manière à transmettre un mouvement de rotation à l'élément intérieur (160) par l'intermédiaire de la surface de butée (160A) lorsque la tige de piston (108) est étendue au maximum, un mouvement relatif de rotation entre les moyens faisant cylindre (104) et la tige de piston (108) lorsque la tige de piston (108) est étendue au maximum provoque un réglage de la position axiale de la surface de butée (160A).

7. Ressort pneumatique selon l'une quelconque des revendications précédentes, **caractérisé en ce qu'**il est prévu un ressort de compression (156) dans la deuxième chambre (136).
